# EUROPÄISCHE PATENTANMELDUNG

(11) **EP 0 931 707 A2**
(43) Veröffentlichungstag der Anmeldung: **28.07.1999**
(21) Anmeldenummer: 98124123.5
(22) Anmeldetag: 18.12.1998
(51) Int. Cl.: B60S 1/52, B05B 1/14

(54) **Düseneinrichtung zur Reinigung einer Scheibe**

(30) Priorität: 23.01.1998 DE 19802491
(71) Anmelder: Mannesmann VDO Aktiengesellschaft, 60388 Frankfurt am Main (DE)
(72) Erfinder: Goldbach, Matthias, 36179 Bebra (DE)
(74) Vertreter: Klein, Thomas, Dipl.-Ing.

(57) **Zusammenfassung**

Die Erfindung betrifft eine Düseneinrichtung (1) zur Reinigung einer Scheibe, insbesondere einer Windschutzscheibe oder einer Streuscheibe eines Scheinwerfers eines Fahrzeuges, mit zumindest zwei Düsenöffnungen (7, 9), die dadurch gekennzeichnet ist, daß aus den Düsenöffnungen (7, 9) jeweils ein Strahl von Waschflüssigkeit austritt, wobei die zumindest beiden Strahlen unterschiedliche Abstrahlcharakteristika haben oder daß aus den Düsenöffnungen (7, 9) jeweils unterschiedliche Waschflüssigkeiten austreten.

## Beschreibung

Die Erfindung betrifft eine Düseneinrichtung zur Reinigung einer Scheibe gemäß den Merkmalen des jeweiligen Oberbegriffes der unabhängigen Patentansprüche.

Düsen zur Reinigung von Scheiben, insbesondere von Windschutzscheiben von Fahrzeugen, sind bekannt. Diese erzeugen einen Strahl von Reinigungsflüssigkeit, der punktförmig auf der Scheibe auftritt. Diese Art von Düsen, die auch zwei Düsenöffnungen haben können, aus denen dann zwei Strahle austreten, haben sich bei der Reinigung von Windschutzscheiben oder Streuscheiben von Scheinwerfern von Kraftfahrzeugen aber nur beim Einsatz von Scheibenwischern bewährt, da diese die punktförmig aufgespritzte Reinigungsflüssigkeit verteilen und den Reinigungsvorgang somit übernehmen. Aufgrund des Auftreffens des Reinigungsflüssigkeit-Strahles nur in einem kleinen Bereich in Bezug auf die gesamte zu reinigende Oberfläche der Scheibe ist der Reinigungsvorgang nicht optimal, da einerseits nicht die gesamte zu reinigende Fläche mit Reinigungsflüssigkeit benetzt wird und es andererseits eine Zeitlang dauert, bis durch die Verteilung durch die Scheibenwischer die Reinigungsflüssigkeit auf eine größere Fläche, auf die noch nicht auf die gesamte zu reinigende Fläche, verteilt wird.

Der Erfindung liegt daher die Aufgabe zugrunde, eine Düseneinrichtung zur Reinigung einer Scheibe bereitzustellen, mit der zur Verbesserung der Reinigungswirkung bei geringem Verbrauch von Reinigungsflüssigkeit der Benetzungsbereich der Scheibe mit Reinigungsflüssigkeit erhöht wird.

Diese Aufgabe ist durch die Merkmale der Patentansprüche 1 und 2 gelöst.

### Erfindungsgemäß ist daher vorgesehen, daß entweder

aus den Düsenöffnungen jeweils ein Strahl von einer einzigen Reinigungsflüssigkeit austritt, wobei die zumindest beiden Strahlen unterschiedliche Abstrahlcharakteristika haben oder
aus den Düsenöffnungen jeweils unterschiedliche Reinigungsflüssigkeiten austreten.

Diese beiden voneinander getrennt oder auch gemeinsam einsetzbaren Maßnahmen haben den Vorteil, daß aufgrund der unterschiedlichen Abstrahlcharakteristika ein größerer Bereich der Scheibe mit Reinigungsflüssigkeit benetzt wird, so daß Wischer oder dergleichen entfallen können oder bei Vorhandensein von Wischern oder dergleichen eine deutlich schnellere Benetzung der Scheibe mit Reinigungsflüssigkeit gegeben ist, so daß der Reinigungsvorgang der Scheibe beschleunigt durchgeführt werden kann.

Alternativ oder in Ergänzung dazu können unterschiedliche Reinigungsflüssigkeiten aus den zumindest zwei Düsenöffnungen austreten, so daß beispielsweise eine Reinigungsflüssigkeit in größerer, das heißt ausreichender Menge, abgespritzt wird, um den Reinigungsvorgang durchzuführen, wobei ergänzend dazu eine andersartige Reinigungsflüssigkeit, bei der es sich beispielsweise auch um eine Enteisungsflüssigkeit oder um ein Glaspoliermittel handeln kann, abgespritzt wird, um den Reinigungsvorgang zu unterstützten. Dadurch ist gewährleistet, daß der Reinigungsvorgang, insbesondere auch unter dem Aspekt temporärer Gegebenheiten (Sommer/Winter) und regionaler Gegebenheiten (überwiegend staubige oder sandige Verunreinigungen / überwiegend schmierige Verunreinigung), optimiert werden kann. Es kann selbstverständlich auch die Düseneinrichtung getrennt werden, das heißt, daß eine Düse vorhanden ist, die einen punkfförmigen Strahl abspritzt und baulich davon getrennt eine weitere Düse (zum Beispiel Fluidic-Düse) für den fächerförmigen Strahl vorhanden ist.

In Weiterbildung der Erfindung ist die eine Düsenöffnung die einer Fächerstrahldüse, die einen fächerförmigen Strahl von Reinigungsflüssigkeit erzeugt. Damit ist sichergestellt, daß über einen größeren Bereich der Scheibe bei gleichzeitig verringertem Verbrauch von Reinigungsflüssigkeit diese auf die Scheibe aufgebracht werden kann, wobei eine Fächerstrahldüse insbesondere zur Reinigung von Streuscheiben von Kraftfahrzeugscheinwerfern, die aus Kunststoff bestehen, Einsatz findet. Als Fächerstrahldüse kommt beispielsweise eine solche in Betracht, wie sie in den Figuren 2 und 3 in der DE 25 34 288 C2 dargestellt ist und in der dazugehörigen Beschreibung in ihrem Aufbau und ihrer Wirkungsweise beschrieben ist; insofern wird darauf Bezug genommen.

In Weiterbildung der Erfindung ist die weitere Düsenöffnung die einer Einstrahldüse, die einen punkfförmigen Strahl von Reinigungsflüssigkeit erzeugt. Hat die Fächerstrahldüse den Vorteil, daß auf einer relativ großen Fläche bei vergleichbarem sparsamen Umgang mit Reinigungsflüssigkeit diese auf die zu reinigende Fläche aufgebracht werden kann, hat alternativ oder in Ergänzung dazu die Einstrahldüse den Vorteil, daß eine größere Menge von Reinigungsflüssigkeit aufgebracht werden kann, um die Verunreinigungen, gegebenenfalls unter Zuhilfenahme eines Wischers, wegzuschwemmen. Damit wird in vorteilhafter Weise ein Verkratzen durch Schmutzpartikel (wie beispielsweise Sand oder Staub) durch das Wegschwemmen vermieden. Dies gilt für das Aufbringen gleicher Reinigungsflüssigkeiten aus den beiden Düsenöffnungen. Werden hingegen unterschiedliche Arten von Reinigungsflüssigkeiten aufgespritzt, kann ein Grundreinigungsvorgang beispielsweise durch das Aufspritzen von Reinigungsflüssigkeit (beispielsweise Seifenlauge oder dergleichen) mittels der Fächerstrahldüse erfolgen, wobei zur Unterstützung des Reinigungsvorganges eine größere Menge Wasser oder dergleichen zum Wegschwemmen der Schmutzpartikel aufgespritzt wird oder aber auch gezielt eine andere Reinigungsflüssigkeit (wie beispielsweise Enteiser, Intensivreiniger oder Poliermittel) aufgebracht wird. All diese Maßnahmen haben den Vorteil, daß einerseits immer genügend Reinigungsflüssigkeit (worunter auch Wasser zu verstehen ist) aufgebracht wird, um die Schmutzpartikel wegzuschwemmen und ein Verkratzen zu vermeiden und andererseits eine Reinigungsflüssigkeit aufbringbar ist, mit der der Grundreinigungsvorgang deutlich zur Verbesserung der Reinigungswirkung unterstützt wird.

In Weiterbildung der Erfindung ist im Bereich der Düseneinrichtung ein Heizelement angeordnet, wobei in besonders vorteilhafter Weise dieses Heizelement zumindest zwischen der Fächerstrahldüse und der Einstrahldüse angeordnet ist. Dieses Heizelement bewirkt zunächst in vorteilhafter Weise, daß ein Einfrieren der Düseneinrichtung, insbesondere der Düsenöffnungen verhindert wird. Andererseits bewirkt dieses Heizelement, daß in vorteilhafter Weise elektrisch betrieben wird, daß die Reinigungsflüssigkeiten vorgeheizt werden, so daß über das angehobene Temperaturniveau eine Verbesserung der Reinigungswirkung eintritt. Dies wird insbesondere dann unterstützt, wenn auch die Reinigungsflüssigkeit ansich im Reinigungsflüssigkeitsbehälter beheizt wird und/oder auch die Zufuhrleitungen von dem Reinigungsflüssigkeitsbehälter zu der Düseneinrichtung beheizt werden. Je nach Art der eingesetzten Reinigungsflüssigkeit, wenn es sich um unterschiedliche Reinigungsflüssigkeiten handelt, kann es von Vorteil sein, zumindest eine Düse zu beheizen, um die Viskosität der verwendeten Reinigungsflüssigkeit in Abhängigkeit von der Temperatur zu verbessern.

Eine erfindungsgemäße Ausgestaltung der Düseneinrichtung ist im folgenden beschrieben und anhand der Figuren erläutert.

Es zeigen:
- Figur 1: eine Düseneinrichtung mit Blick auf die Düsenöffnungen und
- Figur 2: eine Düseneinrichtung gemäß Figur 1 im Schnitt.

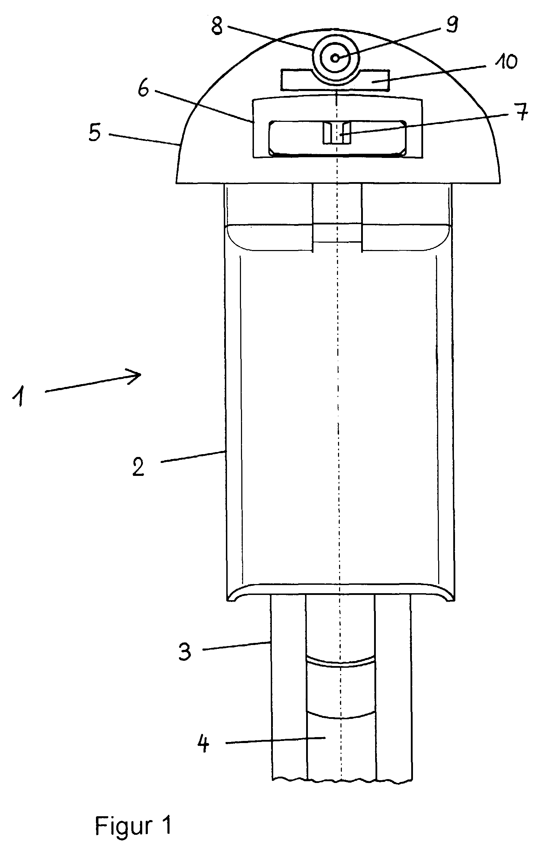

Figur 1 zeigt eine Düseneinrichtung 1, die beispielsweise in einen Ausschnitt (Bohrung) in einer Motorhaube eines Fahrzeuges oder in einem Stoßfänger einsetzbar ist. Die Düseneinrichtung 1 dient dann der Reinigung der Windschutzscheibe, der Streuscheibe eines Scheinwerfers, wobei der Einsatz auch am rückwärtigen Ende des Fahrzeuges oder an sonstigen Stellen denkbar ist.

Die Düseneinrichtung 1 weist einen Sockel 2 auf, der im eingebauten Zustand nicht sichtbar ist. Dem Sockel 2 schließt sich ein Anschlußstück 3 an, wobei auf das Anschlußstück 3 ein Schlauch oder dergleichen aufsteckbar ist. Im Inneren des Sockels 2 und des Anschlußstückes 3 befindet sich eine Zuleitung 4, die es gestattet, Reinigungsflüssigkeit in den Bereich eines Düsenkopfes 5 der Düseneinrichtung 1 zu leiten. Der Düsenkopf 5 ist im eingebauten Zustand der Düseneinrichtung 1 sichtbar, wobei die Formgebung des Düsenkopfes 5 insbesondere aerodynamischen Gegebenheiten folgt. In diesem Düsenkopf 5 ist eine Fächerstrahldüse 6 angeordnet, die einen in etwa fächerförmigen Strahl von Reinigungsflüssigkeit erzeugt. Der Fächerstrahldüse 6 ist dabei die Düsenöffnung 7 zugeordnet. Im eingebauten Zustand der Düseneinrichtung 1 ist oberhalb (alternativ dazu auch unterhalb) eine Einstrahldüse 8 angeordnet, die einen im wesentlichen punkfförmigen Strahl von Reinigungsflüssigkeit erzeugt. Der Einstrahldüse 8 ist dabei eine Düsenöffnung 9 zugeordnet. Während in Figur 1 gezeigt ist, daß die beiden Düsen übereinander angeordnet sind, ist es genauso gut möglich, die beiden Düsen nebeneinander oder versetzt zueinander anzuordnen. Wichtig ist, daß beide Düsen in einer Düseneinrichtung 1 modulartig zusammenzufassen, um den konstruktiven Aufwand für die Zuleitung 4 und für die Montage zu vereinfachen. Durch die in Figur 1 oder ähnliche gezeigte Konstruktion wird erreicht, daß mit nur einem Schlauchanschluß zwei voneinander unterschiedliche Düsen mit unterschiedlichen Abstrahlcharakteristika betrieben werden können.

In Figur 1 ist noch gezeigt, daß sich in dem Bereich zwischen der Fächerstrahldüse 6 und der Einstrahldüse 8 ein Heizelement 10 befindet. Dieses ist in vorteilhafter Weise derart ausgebildet, daß aufgrund seiner flächenmäßigen Ausgestaltung oder aufgrund seines Temperaturniveaus sichergestellt ist, daß der Düsenkopf 5 in einer solchen Weise beheizt wird, die es verhindert, daß die Reinigungsflüssigkeit in den beiden Düsen gefriert und die es gegebenenfalls sicherstellt, die Reinigungsflüssigkeit auf ein gegenüber der Außentemperatur höheres Temperaturniveau anzuheben, um damit den Reinigungsvorgang weiter zu verbessern. Darüber hinaus kann es das Heizelement 10 gestatten, das Temperaturniveau der Reinigungsflüssigkeit soweit anzuheben, daß dadurch die viskosen Eigenschaften der Reinigungsflüssigkeit im Hinblick auf den Abstrahlvorgang verbessert werden.

Sollte die Fächerstrahldüse 6 mit einer anderen Reinigungsflüssigkeit beaufschlagt werden als die Einstrahldüse 8 beziehungsweise umgekehrt, ist dafür Sorge zu tragen, daß am Sockel 2 wenigstens zwei Anschlußstücke 3 mit entsprechenden Zuleitungen 4 vorhanden sind, wobei dann die unterschiedlichen Zuleitungen 4 zu der jeweiligen Düse im Düsenkopf 5 führen. Dies bedingt selbstverständlicherweise - ohne daß dies hier näher gezeigt ist - auch voneinander separate Reinigungsflüssigkeit-Behälter, Pumpen und gegebenenfalls Ventile oder dergleichen. Dies ermöglicht es, daß auch beispielsweise zum Beseitigen von normalen Verunreinigungen nur die Fächerstrahldüse 6 und zusätzlich bei besonders starken Verunreinigungen auch die Einstrahldüse 8 (oder umgekehrt) mit Reinigungsflüssigkeit (insbesondere Intensivreiniger oder einem Glaspoliermittel) beaufschlagt werden.

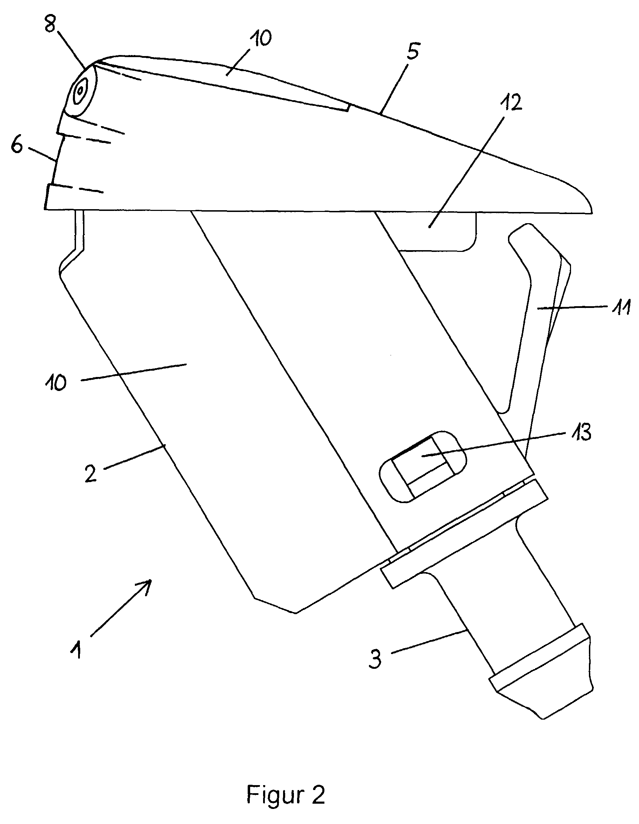

Figur 2 zeigt eine Düseneinrichtung 1 gemäß Figur 1 im Schnitt. Neben den schon in Figur 1 gezeigten und mit den gleichen Bezugsziffern versehenen Komponenten ist in Figur 2 ein erstes Heizelement gezeigt, das sich im Düsenkopf 5 oberhalb der Einstrahldüse 8 befindet. Dies hat den Vorteil, daß der Bereich des Düsenkopfes 5, der vom Fahrtwind beaufschlagt ist, beheizt werden kann, während unterhalb dessen zum Beispiel Motorabwärme zur Verfügung steht, die die Düseneinrichtung 1 aufheizt. Alternativ oder ergänzend zu dieser Anordnung des Heizelementes 10 im Düsenkopf 5 ist es denkbar, auch ein Heizelement 10 parallel zu dem Sockel 2 oder auch konzentrisch beziehungsweise teil-konzentrisch um den Sockel 2 herum anzuordnen, um zu verhindern, daß Reinigungsflüssigkeit in der Zuleitung 4 (oder mehreren Zuleitungen) gefriert.

Weiterhin weist die in Figur 2 gezeigte Düseneinrichtung 1 noch eine Clipsverbindung 11 auf, die es gestattet, die Düseneinrichtung 1 mit dem Sockel 2 in eine Ausnehmung in der Motorhaube, dem Stoßfänger oder dergleichen einzusetzen und dann automatisch mittels der Clipsverbindung 11 lagefest zu fixieren. Zur Unterstützung der Lagefixierung ist unterhalb des Düsenkopfes 5 ein im wesentlichen länglicher Steg 12 vorgesehen, der in eine schlitzförmige Ausnehmung in der Motorhaube, dem Stoßfänger oder dergleichen einrastet. Damit ist auch insbesondere eine lagerichtige und die Montage vereinfachende Fixierung der Düseneinrichtung 1 gegeben. Gleiches kann auch eine Ausnehmung 13 bewirken, die in Wirkverbindung (Kraft- und/oder Formschluß) mit einem karosserieseitig vorhandenen Verbindungselement gebracht wird.

### Bezugszeichenliste:

- 1.: Düseneinrichtung
- 2.: Sockel
- 3.: Anschlußstück
- 4.: Zuleitung
- 5.: Düsenkopf
- 6.: Fächerstrahldüse
- 7.: Düsenöffnung
- 8.: Einstrahldüse
- 9.: Düsenöffnung
- 10.: Heizelement
- 11.: Clipsverbindung
- 12.: Steg
- 13.: Ausnehmung

## Patentansprüche

1. Düseneinrichtung (1) zur Reinigung einer Scheibe, insbesondere einer Windschutzscheibe oder einer Streuscheibe eines Scheinwerfers eines Fahrzeuges, mit zumindest zwei Düsenöffnungen (7, 9), **dadurch gekennzeichnet**, daß aus den Düsenöffnungen (7, 9) jeweils ein Strahl von Waschflüssigkeit austritt, wobei die zumindest beiden Strahlen unterschiedliche Abstrahlcharakteristika haben.

2. Düseneinrichtung (1) zur Reinigung einer Scheibe, insbesondere einer Windschutzscheibe oder einer Streuscheibe eines Scheinwerfers eines Fahrzeuges, mit zumindest zwei Düsenöffnungen (7, 9), **dadurch gekennzeichnet**, daß aus den Düsenöffnungen (7, 9) jeweils unterschiedliche Waschflüssigkeiten austreten.

3. Düseneinrichtung (1) nach Anspruch 1 und 2, **gekennzeichnet durch** Düsenöffnungen (7, 9) mit unterschiedlichen Abstrahlcharakteristika und dem Austritt unterschiedlicher Waschflüssigkeiten.

4. Düseneinrichtung (1) nach Anspruch 1,2 oder 3, **dadurch gekennzeichnet**, daß die eine Düsenöffnung (7) die einer Fächerstrahldüse (6) ist, die einen fächerförmigen Strahl von Waschflüssigkeit erzeugt.

5. Düseneinrichtung (1) nach Anspruch 1,2 oder 3, **dadurch gekennzeichnet**, daß die eine Düsenöffnung (9) die einer Einstrahldüse (8) ist, die einen punktförmigen Strahl von Waschflüssigkeit erzeugt.

6. Düseneinrichtung (1) nach einem der vorhergehenden Ansprüche, **dadurch gekennzeichnet**, daß im Bereich der Düseneinrichtung (1) ein Heizelement (10) angeordnet ist.

7. Düseneinrichtung (1) nach Anspruch 6, **dadurch gekennzeichnet**, daß das Heizelement (10) zumindest zwischen der Fächerstrahldüse (6) und der Einstrahldüse (8) angeordnet ist.
